# EUROPEAN PATENT APPLICATION

(11) **EP 4 147 600 A1**
(43) Date of publication of application: **15.03.2023**
(21) Application number: 22193465.6
(22) Date of filing: 01.09.2022
(51) Int. Cl.: A43B 13/04, B29D 35/00, B29D 35/02, B29D 35/06

(54) **METHOD AND APPARATUS FOR DIRECT SOLING**

(30) Priority: 13.09.2021 DE 102021210100
(71) Applicant: adidas AG, 91074 Herzogenaurach (DE)
(72) Inventor: JEANDIN, Eric, 91074 Herzogenaurach (DE); MERKER, Sergius, 91074 Herzogenaurach (DE); GEYER, Harald, 91074 Herzogenaurach (DE); VOELKER, Felix, 91074 Herzogenaurach (DE); PILSKE, Fabian, 91074 Herzogenaurach (DE)
(74) Representative: Bardehle Pagenberg Partnerschaft mbB Patentanwälte Rechtsanwälte

(57) **Abstract**

The present invention relates to a method (1) for manufacturing a shoe, comprising the steps of a) lasting an upper (101); b) providing an open sole casting mold (102); c) foaming sole material outside the sole casting mold (103); d) injecting the foamed sole material into the sole casting mold (104); and e) bringing the lasted upper into contact with the injected sole material (105).

## Description

### 1. Field of the Invention

The present invention relates to a method for direct soling of shoes, for example of sports shoes, wherein in particular foaming sole material outside a sole casting mold, injecting the foamed sole material into the sole casting mold and bringing an upper into contact with the injected sole material are comprised. The present invention further relates to an apparatus for direct soling of shoes.

### 2. Background

A plurality of methods for manufacturing shoes are known from the prior art. Usually, a lasted upper and a sole are provided separately and then brought into connection by means of different methods, for example by a suitable adhesive. In alternative methods and apparatuses, the sole and the upper are connected by a prior surface processing of the sole, for example by heat treatment, melting, infrared welding, or the like. Due to the complex and cost-intensive work steps and required equipment associated with these methods and apparatuses, there is a need for an improved method and an improved apparatus for manufacturing a shoe, which comprises the connection of the sole to the lasted upper.

In the direct soling method (Direct Soling), a cavity of a molding tool is filled with a molding compound, from which a shoe sole maybe molded. While the molding compound still has an increased temperature, a lasted upper is brought into connection with the injected molding compound. In this way, a connection between the lasted upper and the sole can occur.

In the prior art, some attempts have been made to implement the direct soling method, which, however, have some disadvantages, as will be shown in the following:
For example, the documents CN 110744758 A, CN 212826416 U, EP 1468815 A1 or also US 2014/068879 A1 relate to the pouring method. In the pouring or casting method, a molding compound is poured through a tilting nozzle into an open mold by means of a backward movement of the nozzle. Subsequently, the last is moved towards the molding compound with the shoe shaft from top to bottom, while a bottom stamp moves the filled mold upwards. The disadvantage here is the required long duration until the molding compound is injected into the mold. A further disadvantage is the large drop in temperature during the pouring of the molding compound, thereby increasing the viscosity of the material and making the step of connecting to the lasted upper more difficult. The favorable time window possible for this is also restricted. It would have to be poured at an increased temperature in order to compensate for the drop in temperature, so that an increased effort and increased costs are associated, whereby the method becomes inefficient.

Document EP 3623133 A1 relates to the further possibility of manufacturing a sole or a shoe, in which the molding compound is injected into the mold under increased pressure. The molding compound may be foamed with CO2, for example. Thus, a high effort is associated, since the tightness of the mold must be ensured by suitable apparatus measures. For example, in this method, the wall thicknesses of the molded body or the casting mold must be increased in order to withstand the increased internal pressure. In addition, particularly resistant materials must be used. In addition, suitable seals must be provided at the complex geometries, which withstand the frequently performed method cycles. This requires a high cost and maintenance effort and also an increased risk of production failure for the operator.

Document US 2019/0365027 A1 relates to an upper which is directly connected to the sole. The directly attached sole has an insert, such as an airbag, which forms a part of a sidewall. The insert is visible from the outside and forms at least a part of the outer sidewall of the sole. The insert is molded into the directly attached sole by bringing the insert or a mask temporarily connected to the insert into contact with a sidewall mold surface of a mold used in the direct attaching process, so that the insert forms a visible element of the directly attached sole.

Further prior art is disclosed in KR 100 457 446 B1, DE 10 2015 108 086 A1, US 5 667 738 A, US 5 890 248 A and US 2012/0056345 A1.

Starting from this prior art, the object of the invention is to provide a method for direct soling, whereby the above-mentioned disadvantages of the prior art can be overcome. In particular, an object is to provide a method which facilitates the manufacture of shoes by an improved, faster, more efficient and cost-reduced direct soling.

A further objective of the invention is to provide an apparatus for direct soling in order to overcome the above-mentioned disadvantages of the prior art. In particular, a simplified apparatus shall be provided, with which a plurality of cycles for manufacturing shoes is enabled in a short time. The provided apparatus shall be more cost-effective than previous apparatuses and thus be used very economically. In addition, it shall require a very low maintenance effort, shall not place high demands on the tightness and shall be built with constructively easy means and shall thus be easy and automated to control and to be controlled in an automated manner.

### 3. Detailed Description of the Invention

The above-described objectives and objects of the present invention, which are also mentioned when reading the following description or can be recognized by the person skilled in the art, are achieved with a method, an apparatus and a shoe according to the subject-matter of the independent claims. Advantageous further developments are described in the dependent claims. The technical characteristics shown in the following for the method, the advantages of the method and the improvements over the prior art apply equally to the apparatus for carrying out the method.

In particular, the objectives are achieved by a method for manufacturing a shoe, comprising the steps of: a) lasting an upper; b) providing an open sole casting mold; c) foaming sole material outside the sole casting mold; d) injecting the foamed sole material into the sole casting mold; and e) bringing the lasted upper into contact with the injected sole material.

This arrangement provides a plurality of improvements, whereby in particular the disadvantages of the prior art are overcome. The provision of an open sole casting mold enables an easy closing of this mold by further components, as explained in more detail below. Thereby, "closing" or "closure" is not necessarily to be understood as an airtight closure. The foaming of sole material already outside the sole casting mold is particularly advantageous, since further foaming can be largely prevented after the injection. In particular, further expansion of the material in the sole casting mold can thus be substantially prevented. This enables the targeted provision of a final product, such as e.g. an entire shoe or a part of a shoe, for example a sole. In particular, the density of the final product can be determined and predicted very well in an advantageous manner by this type of material provision. The determination of the required contact pressures of further elements, for example a traverse element, punch or bottom punch, which acts on the sole material from below in order to bring it into the mold of the final product, can thus be simplified, since an independent expansion of the material in the sole casting mold is largely not present. In addition, a weight saving compared to other, disadvantageous methods of the prior art, e.g. the high-pressure injection method, can be enabled. Due to the contact of the lasted upper with the injected sole material, particularly the entire method can be improved, it enables the connection of both elements without additional auxiliary means, for example an adhesive or the like. An advantageous embodiment of the method is represented by the sequence of steps a), b), c), according to which first a closing of the upwardly opened sole casting mold occurs by the lasted upper. Thereafter, step d) occurs. Thereafter, a further step may follow, in which pressure is exerted from below onto the injected sole material, for example by a punch, bottom punch or the like. The punch may namely deform the sole casting mold such that the injected sole material located therein comes into contact with the upper. However, alternatively, step c) may also occur immediately before step d). In particular, the method may also comprise steps of curing, cooling, as well as moving an injection device towards and away from the sole casting mold. The pressure with which the material is injected into the sole casting mold may be in the range of 15 bar +/- 6 bar. Depending on the type of material composition as well as the desired final product, other pressures may also be comprised.

The sole material used in the method may further experience a density change of at most of 5% relative to the density of the sole material during the injecting in a time of 0.5 seconds after injecting into the sole casting mold. Thereby, during the injecting, it is to be understood as the time in which the sole material gets into the sole casting mold.

Thus, among other things, the advantage may be achieved that the material already foamed outside the sole casting mold does not expand substantially further immediately after getting into the sole casting mold. Preferably, the time may also be 0.3 seconds, most preferably 0.1 seconds and the maximum density change may preferably be a maximum of 3% and most preferably a maximum of 1%. Thus, it is advantageously ensured that the spatial expansion of the sole material foamed outside the sole casting mold is already largely determined. By a reduced expansion of the foamed sole material within the sole casting mold, a foaming over of edges of the sole casting mold may also be reduced. In addition, in this way, the determination of the required travel paths of a lasted upper and a movable component of the sole casting mold in order to bring the sole material into contact with the upper may be adjusted in advance and thus maintained for the entire shoe production and is not subject to interfering influences or possibly fluctuations due to material contaminations, which would lead to a different expansion behavior. Before the injection, the sole material may be guided through walls, which are no longer present immediately after the injection into the sole casting mold and thus no longer delimit the sole material, for example. Between these two states, an expansion of the material may therefore still occur.

The foaming of the sole material comprised by the method may further comprise: c.1) providing of a first material, the first material comprising at least one of the list of thermoplastics, elastomers, and thermosets; and c.2) providing of at least one blowing agent. Preferably, the first material comprises thermoplastic polyurethane (TPU).

The first material used herein offers the advantage of a simple handling, a simple availability, and a facilitated processing. The blowing agent may preferably comprise solid blowing agents and/or gaseous blowing agents, wherein solid blowing agents comprise chemical and/or physical solid blowing agents or a combination thereof, wherein gaseous blowing agents comprise, e.g., a CO2 gas injection. By using a type of TPU pellets with a blowing agent, the desired properties such as density and heat resistance and viscosity may be meaningfully adjusted and appropriately adjusted for the respective application, whereby the method is improved. The method according to the invention is not limited to the use of TPU as the first material. In particular, extrusion-capable materials could also be used.

Providing of the first material comprised by the method may further occur in the form of pellets. Providing of the at least one blowing agent may likewise occur in the form of pellets. Preferably, TPU pellets may also be used as the first material.

In addition, these are preferably mixed with blowing agents, wherein the blowing agents are likewise present in the form of pellets. Thus, advantageously, handling of the materials as well as processing of the materials and the apparatuses required therefore are simplified and improved.

The foaming of the sole material comprised by the method may further comprise: c.3) forming a mixture of the first material and the blowing agent; and c.4) drying the mixture, wherein drying may be configured such that the maximum moisture content of the mixture is 2.0%. Preferably, the maximum moisture content of the mixture may also be 1.5%, more preferably 1%, even more preferably 0.4%, most preferably below 0.4%.

Due to the low moisture content of the mixture thus created, the risk of the formation of streaks or other undesired side effects in the final product may be avoided. A moisture content, which is too high, is also undesired for the homogeneity of the final product, since the moisture spots have different damping properties than the remaining material. In addition, cavities may be formed in the final product. The wearing comfort is accordingly increased by the provision of a low moisture content. Economic advantages may be provided by an efficient drying of the mixture, whereby the costs during production maybe reduced. Further, drying may contribute to improving the processability of the mixture. In some cases, drying may contribute to also allowing processability in the first place. The mixture is preferably configured such that a homogeneous distribution is formed, in which the components of the materials are uniformly distributed.

The foaming of the sole material comprised by the method may further comprise: c.5) compacting and heating the mixture to cause an interaction, in particular a foaming, of the mixture, wherein the foaming may be accompanied by a decrease in density.

By compacting and heating, the reaction of the mixture may be triggered and may also be controlled and/or influenced in an advantageous manner by the process parameters. By the reaction, the blowing agent is activated and thereby the TPU material may foam. In this case, it is particularly advantageous that the material is foamed prior to injection and may substantially already be present in a foamed state. Thus, after injection, foaming no longer takes place and the material supply may be controlled better and in an advantageous manner for the respective product.

The density of the injected sole material used in the method may be in a range between 0.2 - 1.2 g/cm³ Preferably, the density maybe in the range between 0.4 - 1.0 g/cm³ more preferably between 0.45 - 0.8 g/cm³ and most preferably between 0.5 - 0.7 g/cm³. The present invention also comprises a possibly slight change of the density of the material in the moment of injection and the density of the material of the final product. In this case, the final product may be even more compacted, possibly due to geometry changes of the sole mold, as explained further below. Due to the different densities of the material supported by the method, advantageously also light soles may be provided, thus a wearing comfort may be considerably increased and improved. For example, lifting of the shoe or the foot is facilitated when wearing the shoe. In particular, this may be accompanied by a saving of the muscle strength. Due to lower densities, also material may be saved, whereby the manufacturing occurs more economically and environmentally friendly. Higher densities are also comprised and advantageously enable the provision of a stable shoe.

The present method may further be characterized in that the direction in which the sole material is injected into the sole casting mold changes relative to the sole casting mold over the time.

The injection trajectory of the sole material may, for example, be curved, wavy and/or serpentine. Thereby, the sole material changes its direction during the injection process and in particular does not inject necessarily and not during the entire course perpendicularly out of the outlet nozzle surface. Advantageously, it may be ensured by the material composition, among other things, that the material, even if it exits the nozzle outlet surface at high speed, hits against walls of the sole casting mold, it nevertheless does not trigger any, possibly undesired, back-injections, whereby material could be widely scattered back and possibly the material may escape the sole casting mold. The shape of the injection of the sole material may in particular be provided by a special shape of the sprue channel for profile specification of the foamed (or also extruded) TPU material. A square cross-section could possibly cause a different change of direction due to the foaming. A circular cross-section appears advantageous. The viscosity also influences the formation of a curved, wavy and/or serpentine formation of the sole material during injection. If the material is formed to be viscous, for example, the geometry of the sole material specified by the sprue channel advantageously does not flow in the sole casting mold. Instead, the material may better conform to the cavity specified by the sole casting mold and provide a homogeneous final material quality by folding and superimposing.

In particular, the curved, wavy and/or serpentine formation of the sole material may form due to the cohesion of the sole material caused by the viscosity, whereby the sole material may maintain the shape even during the rebound, i.e., for example, after impinging on the sole casting mold or on an inner wall of the sole casting mold, and may advantageously overlap with the material flowing thereafter in the sole casting mold. Thus, a continuous thread consisting of the sole material having a thickness of approximately the cross-section of the sprue channel maybe provided without back-injection, wherein the thread may form in the course of the injection always further into a folded or curved and wavy overlapping mass. The thickness of the thread may still change slightly over time, for example, the thickness of the thread may become somewhat larger over time. The thickness of the thread may thus also be larger than the cross-section of the sprue channel.

The method steps comprised by the present method may further comprise an air entry and/or air exit between the sole casting mold and the environment.

The air entry and/or air exit enabled with the method offers the advantage that no chamber, pressure chamber, no pressure-proof container, no autoclave, or something comparable has to be provided, whereby the sole casting mold is sealed airtight to the environment. Thus, the method according to the invention represents a substantial improvement. In particular, thus, a reduced apparatus-like, complex structure is required, whereby costs may be saved. The walls of the apparatus may be implemented easily and with small wall thicknesses. Furthermore, a maintenance effort is reduced. In addition, a possible hazard for the personnel and the environment during operation of the apparatus used for the method decreases, since in particular no, possibly unexpected, outflows of the interior under high pressure may occur. In other methods of the prior art, such an airtight seal is required, such as e.g. in methods in which material is injected into a mold with high pressure.

The method steps may further comprise an absolute value of pressure difference between the sole casting mold and the environment of a maximum of 10% of the environmental pressure. Preferably, the absolute value of pressure difference may be a maximum of 8%, more preferably a maximum of 6%, even more preferably a maximum of 4% and most preferably a maximum of 2%.

The pressure difference between the sole casting mold and the environment may thus be very low. A low pressure difference is particularly advantageous, since in particular but not exclusively during the injection process no measures for maintaining the pressure in the sole casting mold are required. The pressure difference may also converge to zero or be zero in some method steps, if e.g. the lasted upper and/or the lower punch of the sole casting mold do not close them. This pressure difference relates, among other things, to the step of injecting the foamed sole material into the sole casting mold. In the step of bringing the lasted upper into contact with the injected sole material, the pressure difference may in some cases also be higher.

The method may further comprise a geometry change of the sole casting mold to bring the injected sole material into a predefined shape.

The geometry change of the sole casting mold may be enabled by components which are in communication with the sole casting mold. Thus, in a simplified manner, the injected sole material maybe molded. For example, a component, e.g. a punch or die, may be provided from a bottom side. A top side of the punch may represent a part of the sole casting mold in which the sole material is present. The predefined shape may be determined by the remaining walls of the sole casting mold in a flexible manner and according to the desired shape of the final product.

The method may further comprise a step of moving the lasted upper towards the sole casting mold.

This enables a closure of the sole casting mold in an advantageous and efficient manner. The closure may thereby be understood such that by moving the lasted upper towards the sole casting mold, an arrangement may be achieved in which the injected sole material, e.g. foamed material, may substantially not escape at the edges of the upper. The edges thereby represent the transition between the upper and the sole casting mold. The closure may be an upper closure, for example, if the sole casting mold is opened upwards. An upper closure is to be understood as the closing of the upwardly opened sole casting mold and thus the top side of the final sole. Due to the use of the lasted upper as a closing unit, a direct connection between the sole and the lasted upper may be provided in particular in an improved manner. In addition, no further components are required which represent a closure of the top side or possibly another side of the sole casting mold and which are not part of the final product. Thus, the method is particularly resource-saving. The method is additionally particularly flexible. This becomes clear in particular in that not only the lasted upper may be moved towards the sole casting mold. Rather, other elements may also be moved towards the sole casting mold, for example if only individual elements of a shoe, such as e.g. only a sole or the like, are manufactured by the method. Then different component, such as e.g. a displacer, may be used which may be configured to hold the material in a mold, preferably from the top side, if a component brings the material from the bottom side into a predefined shape. In this case, the displacer may act on the top side as a latching for the material. It is not excluded that the lasted upper moves relative to the sole casting mold after the injection process. It is in particular conceivable that the lasted upper or the displacer moves further towards the sole casting mold after the injection process in order to bring the sole material into a predefined shape. Preferably, the previously described punch may also or exclusively be used for this, which presses the material e.g. from bottom to top and possibly compacts it. It is also conceivable that both the punch and the lasted upper move, or move towards the sole casting mold. This may in particular also occur after the injection process. In this way, advantageously two possibilities for adapting the shape and/or the pressure application of the injected sole material are provided. Preferably, the traverse element, or the punch, bottom punch or the like, may be configured such that it is moved substantially immediately after injection into an end position. In this way, it may advantageously be ensured that the viscosity of the injected sole material is in an optimal range for shaping. In particular, a longer temporal offset between injection and movement of the traverse element is avoided. Thus, cooling of the sole material can be largely prevented or reduced. In an advantageous embodiment, the sole material may thus be processed in the sole casting mold in a very warm, preferably in the warmest state or in the state of a very high temperature and with low viscosity. Thus, the flow properties are improved and the sole material may better adapt to the specified geometry of the sole casting mold, in particular to smaller recesses, niches or strong three-dimensional changes of the shape. Thereby, the entire method becomes faster, more efficient and more cost-effective.

The method may further comprise a step of molding a lower surface of the lasted upper such that the lower surface substantially forms an upper closing surface of the sole casting mold.

By providing a closing surface, a heat loss may be reduced. Thus, advantageous material properties, such as the flow property of the injected sole material, are maintained. The method becomes more cost-effective in this manner, since no apparatuses for heating the sole material are required. However, the upper closing surface of the sole casting mold may also be enabled by a displacer.

The method may further be configured such that molding of the lower surface is performed prior to injecting the sole material, wherein the surface continues to exist in the further method steps.

Advantageously, the lasted upper moves towards the sole casting mold prior to injection. Thus, already during the injection process, a shielding against heat loss is provided. Preserving this shielding for the following method steps is advantageous, at least to the effect that the heat loss is further prevented.

The injected sole material comprised by the method may further be configured such that it forms a sole.

The method may also enable the provision of only a part of a shoe, e.g. a sole. For this, for example, no lasted upper is required to form a closing surface, instead this may be done by a displacer.

The method may further be configured such that the sole is attached to the lasted upper, wherein the attachment may occur without additional adhesive.

The sole may preferably be attached to the lasted upper without additional adhesive. Thereby, the method becomes more efficient, faster and more productive. In addition, the use of further resources is saved. Furthermore, it is comprised, however, that the sole is also attached to the upper with the help of additional means. This could be of advantage for some embodiments. In embodiments, in which only a sole is provided as a final product, no attachment has to occur. In this case, instead of an upper, a displacer may be used, for example, which may be brought into contact with the sole material.

The lasted upper may further comprise the same material as the injected sole material.

The method offers the particular advantage of directly manufacturing a shoe in the so-called direct soling method. In particular, a TPU foam cup sole (a one-piece midsole and outsole) in combination with a TPU upper is also comprised. Due to the combination of materials used in this manner, the method for manufacturing a shoe overall is very economical and particularly efficient. Due to the use of the same material, the upper is first manufactured from TPU, e.g. knitted, warp-knitted, sewn, crocheted, woven or in any other way, then the upper is pulled onto a last and this lasted upper is brought into contact with the sole material and connected in order to manufacture a shoe therefrom. Due to the use of the same material of the upper and the sole, both shoe parts have the same chemical properties, whereby, for example, a recycling of the shoe is improved and simplified. The circulation of the used material over the entire product life cycle of the shoe as well as beyond this may thus be improved in a resource- and environmentally friendly manner. The distribution of environmentally sustainable products may be substantially improved in this manner. However, it is also conceivable that other materials are used for the provision of the upper, for example leather, synthetic leather or other, usually used materials.

In the following, an apparatus according to the invention is described, with which the above-described method according to the invention may be carried out. The technical characteristics shown or described for the method, the advantages of the method and the improvements over the prior art apply equally to the now following apparatus for carrying out the method.

The present invention further relates to an apparatus for manufacturing a shoe, comprising: a) at least one open sole casting mold configured to receive a lasted upper; b) at least one spraying means configured to be placed in communication with the sole casting mold to enable injection of sole material into the sole casting mold; and c) at least one foaming unit configured to foam the sole material prior to injection into the sole casting mold.

In addition, the sole casting mold may advantageously be designed such that it enables direct cooling, for example in order to allow injected material to be heat-treated or cured in a targeted manner in the sole casting mold. Thus, the curing temperature is not too high and/or not too low. As a coolant, e.g. water or another suitable liquid may be used. The cooling mechanism may be designed such that cooling channels are introduced into the sole casting mold. The cooling channels according to an embodiment of the present invention, through which the coolant is conducted, ensure a better heat transfer and thus a more efficient cooling of the sole material. Thus, the efficiency and the productivity may be increased. This offers an advantage over conventional cooling mechanisms, in which the cooling is carried out via outer elements, e.g. the jaws of a sole casting mold. In such conventional cooling mechanisms, the path length from the injected material to the coolant is substantially larger, whereby the heat transfer resistance is increased and the cooling is thus not efficient. According to the present invention, the path length from the injected material to the coolant may be advantageously reduced, among other things.

The sole casting mold, which is comprised by the apparatus, is preferably substantially not sealed airtight with the received upper. The apparatus may further enable an air entry and/or air exit between the sole casting mold with the received upper and the environment. The absolute value of pressure difference between the sole casting mold with the received upper and the environment of the present apparatus may further be a maximum of 10% of the environmental pressure. Preferably, the absolute value of pressure difference may be a maximum of 8%, more preferably a maximum of 6%, even more preferably a maximum of 4% and most preferably a maximum of 2%.

This arrangement enables, among other things, a cost-effective provision of the components of the apparatus. In particular, no pressure chamber has to be provided. The wall thicknesses may also turn out to be smaller. A further advantage is that no complex safety measures are required, such as in apparatuses comprising pressure chambers, as is the case with high-pressure methods for manufacturing shoes.

The sole material and/or the spraying means of the present apparatus may be configured such that the direction in which the sole material is injected into the sole casting mold changes relative to the sole casting mold over the time.

The injected sole material of the present apparatus maybe configured such that it experiences substantially no further expansion.

The sole material of the present apparatus may further be configured such that it comprises a density change of a maximum of 5% relative to the density of the sole material during the injecting in a time of 0.5 seconds after injecting into the sole casting mold. Thereby, during the injecting, it is to be understood as the time in which the sole material gets into the sole casting mold.

Thus, among other things, the advantage may be achieved that the material already foamed outside the sole casting mold does not expand substantially further immediately after getting into the sole casting mold. Preferably, the time may also be 0.3 seconds, most preferably 0.1 seconds and the maximum density change may preferably be 3% and most preferably 1%. Thus, it is advantageously ensured that the spatial expansion of the sole material foamed outside the sole casting mold is already largely determined. By a reduced expansion of the foamed sole material within the sole casting mold, a foaming over of edges of the sole casting mold may also be reduced. In addition, in this way, the determination of the required travel paths of a lasted upper and a movable component of the sole casting mold in order to bring the sole material into contact with the upper may be adjusted in advance and thus maintained for the entire shoe production and is not subject to interfering influences or possibly fluctuations due to material contaminations, which would lead to a different expansion behavior.

The foaming unit comprised by the apparatus may comprise at least: a.) means for mixing configured to mix a first material comprising at least one of the list of thermoplastics, elastomers, and thermosets and at least one blowing agent into a mixture; b) means for drying configured to dry the mixture or the first material; and c.) means for compacting and means for heating configured to compact the mixture and to supply heat to the mixture to cause a foaming of the mixture.

Providing of the at least one blowing agent may preferably occur in the form of pellets.

The means for drying comprised by the apparatus may comprise a heating unit and a fan unit configured to provide a maximum moisture content of the mixture of 1.0%. Preferably, the maximum moisture content of the mixture may also be 1.5%, more preferably 1%, even more preferably 0.4%, most preferably below 0.4%.

The means for compacting comprised by the apparatus and the means for heating comprised by the apparatus may comprise at least one extruder and at least one heating system, wherein the extruder may comprise at least one screw which may be configured such that the mixture can be blended, compacted and transported by rotational movement of the screw.

The sole casting mold comprised by the apparatus may further comprise a traverse element configured to change the geometry of the sole casting mold and to bring the injected sole material into a predefined shape, wherein a movement of the traverse element in one direction decreases the volume of the sole casting mold, and wherein a movement of the traverse element in the opposite direction increases the volume of the sole casting mold.

This arrangement enables the targeted control of pressure application of the traverse element to the injected sole material. For example, the traverse element may be arranged at a bottom side of the sole casting mold and it may also be part of the sole casting mold. The traverse element may further move relative to the sole casting mold. In an advantageous manner, a/possibly several channel opening(s) may also be closed by the movement of the traverse element in order to thus prevent a material backflow from the sole casting mold into the opening. The traverse element, or the punch, may be driven with 20-120 kN, preferably with 40-100 kN, more preferably with 60-80 kN or also with 70 kN, for example.

The traverse element comprised by the present apparatus may be movable in a first translational direction, wherein the first translational direction is substantially perpendicular to a lower surface of the lasted upper.

This arrangement enables a simple movement mechanism of the traverse element, whereby the complexity and the technical effort of the apparatus may be reduced.

The sole casting mold comprised by the apparatus may comprise at least two opposing elements configured to receive and release the upper, wherein the at least two opposing elements are movable in a second translational direction, wherein the receiving and releasing of the upper may occur by an opposing translational movement of the at least two elements. The first translational direction and the second translational direction described with respect to the apparatus may be oriented substantially perpendicular to each other.

The at least two opposing elements may represent lateral supports and may also serve to describe the circumferential shape, for example the lateral shape of a sole. After, for example, the lasted upper is lowered, the apparatus may provide a support for the toe region of the upper in order to prevent a movement of the upper in the further course of the method, in particular during injection. If only a shoe part, such as e.g. a sole, is manufactured, such a support is not necessary. Then, the injection of the material may occur, which is followed by the movement of the traverse element in the first translational direction, for example from bottom to top in the direction of the lasted upper. The traverse element is configured such that it may bring the sole material into connection with the upper by the upward movement.

The sole casting mold comprised by the apparatus and/or the traverse element may further comprise plastic material. The plastic material may comprise polymer materials such as e.g. thermoplastics and/or thermosets.

This arrangement enables the provision of a very simplified apparatus, whereby costs in the manufacturing of the apparatus may be saved. The apparatus may thereby be manufactured in a very simplified manner. In particular, different sole casting molds may be quickly manufactured from polymer materials. Thus, different sole molds may be flexibly produced. The sole casting molds may even be manufactured in a cost-effective manner by means of a 3D printing method.

The sole material comprised by the apparatus maybe injected into the sole casting mold by means of a channel comprised by walls of the sole casting mold, wherein the size of the opening of the channel may be adjustable, and wherein the diameter of the opening is in the range of 2-30 mm. The size of the opening of the channel comprised by the present apparatus may also be in the range of 3-15 mm or also in the range of 6-12 mm. Preferably, the diameter of the channel may substantially correspond to the diameter of the spraying means.

The adjustability and adaptability of the opening of the channel advantageously provides the use of a plurality of possible materials. In particular, in this way, a plurality of materials are also enabled, which have different viscosities. At a higher viscosity, larger openings are offered, whereby the surface to volume ratio is reduced and thus the frictional resistance of the material may be decreased. However, smaller openings for viscous materials are also comprised by the invention. For the channel, in particular different aperture/throttle geometries may also be used, for example circular/angular/oval or other geometries, which are all comprised by the present invention. The diameter may be designed circular with a diameter of, for example, 7 mm. In other embodiments of the sprue channels, diameters of 5 mm may be used. A reduced diameter may cause an increased flow rate of the material. Thus, it is advantageously ensured that, despite the increased surface to volume ratio, too few material accumulations occur at the sprue channel, since a formation of this accumulation more often- to the increased speed-from the sprue channel and thus gets into the mold in smaller amounts. A possible insulating effect of the material accumulations within the mold may thus be reduced. A possible local overheating due to material accumulations in the mold, which may possibly be caused by shear forces, may thus be avoided. A merit of the present invention is to cause lower material accumulations at smaller diameter sizes and thus to advantageously reduce discolorations in the final product, which are caused by material accumulations dissolved and transported into the mold. Depending on the material mixture, the sprue channel may advantageously be designed as a conical sprue channel with, for example, a diameter of 7 mm at the inlet (nozzle side) and a diameter of 5 mm at the outlet (cavity). Further, the sprue channel maybe replaced in a simplified manner and thus provide, for example, a sprue channel with a diameter of, for example, 7 mm, which has a throttle with a diameter of 5 mm. The cross-sections are arbitrarily adaptable to the inlets/outlets and the intermediate areas.

The present apparatus may further comprise a plurality of sole casting molds, wherein the sole casting molds may be arranged movable to the at least one spraying means, wherein the apparatus may be configured such that the method according to the invention for manufacturing a shoe may be applied continuously using the sole casting molds.

In this way, shoes may be produced faster. In particular, the use of only one spraying means is required in order to operate several sole casting molds. This reduces the costs of the apparatus and the method. However, several spraying means may also be used. This would happen if the plurality of sole casting molds exceeds a number at which the use of only one spraying means would be uneconomical.

The sole casting molds comprised by the apparatus may further be arranged circularly, and configured such that a relative movement to the at least one spraying means can be performed by rotation about the central axis of the circular arrangement.

In this way, the production of several shoes may be enabled in a space-saving manner. The circular arrangement may, for example, be a rotating table. The spraying means or the nozzle unit for injecting the material only has to be moved translationally in one direction towards the respective sole casting mold in use, inject the sole material, and finally be moved backwards away. Then, the rotating table may be rotated further about an angular range so that the subsequent sole casting mold may be used. It is particularly advantageous that the foaming unit and thus the means comprised therein for mixing, drying, compacting, and heating only have to be provided simply. Thereby, the entire method becomes even more efficient.

The present invention further comprises a shoe which may be manufactured according to the inventive method for manufacturing a shoe.

In this embodiment, the shoe comprises the particular advantages provided by the method and the apparatus. Among other things, the shoe may comprise a very light sole since the sole material is already foamed before injection. Moreover, the shoe may be particularly attractive and aesthetically designed, since no adhesive or a connecting element for mechanically connecting both parts is required for connecting the sole to the upper. In particular, the residues caused by an adhesive can thus be prevented. Such residues may often manifest themselves visibly on the outer surfaces of the shoe, from which the product quality and appearance suffer. Thereby, the attractiveness at the customer is reduced. Moreover, the adhesive and the shoe material often contain different chemical properties, whereby the aging process of the involved materials has different characteristics and both shoe elements may, for example, detach from each other, whereas the individual elements still have very good properties, e.g. mechanical properties. All these disadvantages can be overcome by the shoe provided here.

In particular, the present invention may, among other things, enable the provision of plasticised and at the same time foamed TPU material without high pressure and thus the manufacture of a shoe or a shoe sole without adhesive in one manufacturing step. The shoes manufactured by this method and this apparatus are particularly firmly connected to each other between the shoe sole and the upper. In particular, they can hardly be mechanically detached from each other and thus offer a high durability, whereby the shoes become particularly durable and thus the sustainability is promoted. The recycling of the shoe may be particularly improved by the connection of the shoe sole and the upper without the use of adhesive, since, among other things, no separation from the chemicals used for the adhesive has to occur. Thus, a further contribution to environmental protection is made.

### 4. Brief Description of the Figures

In the following, the present invention will be explained in more detail with reference to the accompanying figures. The figures show:
- Fig. 1: a process diagram according to an embodiment of the method of the invention;
- Fig. 2: an illustrated flow diagram according to an embodiment of the method of the invention together with an embodiment of the apparatus of the invention;
- Fig. 3: a diagram for preparing the sole material outside the sole casting mold in a foaming unit according to an embodiment of the method of the invention and the apparatus according to the invention;
- Fig. 4: an embodiment of an apparatus according to the invention from a plurality of sole casting molds with a spraying means and a foaming unit according to an embodiment of the present invention;
- Fig. 5: an embodiment of the apparatus according to the invention for manufacturing a shoe with cooling channels;
- Fig. 6a: an embodiment of the method of the invention and the apparatus of the invention for manufacturing a shoe during an injection process;
- Fig. 6b: an embodiment of the method of the invention and the apparatus of the invention for manufacturing a shoe during an injection process;
- Fig. 6c: an embodiment of the method of the invention and the apparatus of the invention for manufacturing a shoe during an injection process; and
- Fig. 6d: an embodiment of the method of the invention and the apparatus of the invention for manufacturing a shoe during an injection process.

### 5. Detailed Description of Preferred Embodiments

In the following, only some conceivable embodiments of the present invention are described in detail. However, the present invention is by no means limited to these, but comprises a plurality of further embodiments without departing from the scope of the invention as encompassed. In particular, the following embodiments may be modified or changed in a variety of ways and in particular combined with each other. Further, the features disclosed in the shown embodiments are also to be considered separately and detached from each other and may also be omitted in some embodiments or transferred to other embodiments.

While the following embodiments are primarily described with reference to a shoe, the person skilled in the art will appreciate that the method according to the invention and the apparatus according to the invention may be applied equally by the injection of the foamed material during the manufacture of any desired footwear or article.

In the present figures and the description, the same reference numerals refer to the same elements. The figures may not be true to scale and the relative size, proportions and depiction of the elements in the figures may be exaggerated for clarity, presentation and simplicity. The use of the term "sole material" may also be understood as "foamed sole material".

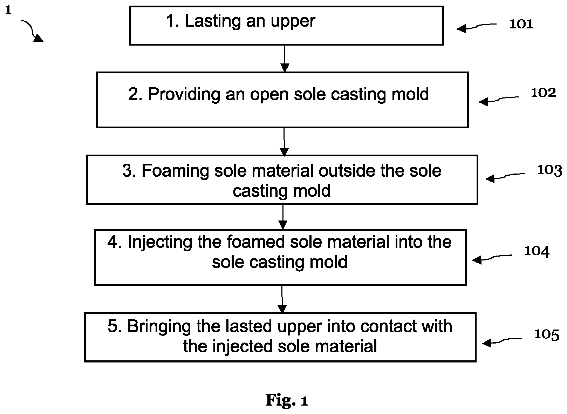

Fig. 1 shows a process diagram according to an embodiment of the method (1) of the present invention. In a first step, an upper (10) is lasted (101), thereafter a sole casting mold (15) is provided (102). Further, foaming (103) of sole material (20) occurs outside the sole casting mold (15). Subsequently, the foamed sole material (20) is injected (104) into the sole casting mold (15). Finally, the lasted upper (10) is brought into contact with the injected sole material (20) (105). After injecting, the sole material experiences a density change of a maximum of 5% relative to the density of the sole material immediately before injecting.

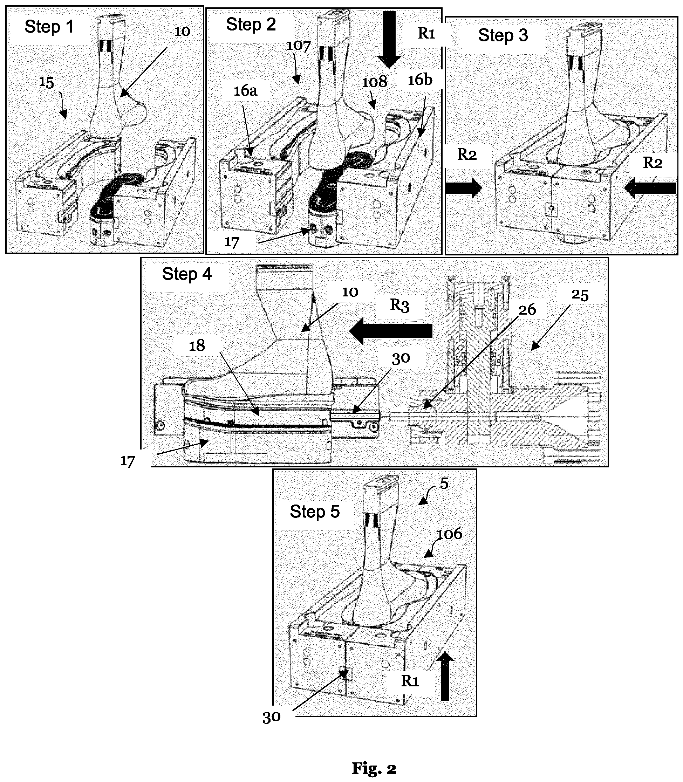

Fig. 2 shows an illustrated flow diagram according to an embodiment of the method (1) of the invention together with the apparatus (5) according to the invention for manufacturing a shoe. For reasons of clarity, the reference numerals are partially limited to certain steps of the flow diagram. In step 1, the lasted upper (10) as well as the sole casting mold (15) is shown. In addition, two opposing elements for receiving and releasing the upper (16a, 16b) are shown which represent components of the sole casting mold (15) and which may be translationally moved in the lateral direction R2 (see step 3). Further, the traverse element (17) of the sole casting mold is shown which may also be referred to as punch or bottom punch and is translationally movably arranged in the direction R1. In step 2, the lasted upper (10) is translationally moved (107) towards the sole casting mold along the direction R1. In addition, it is thus ensured that a lower surface is molded (108) which substantially represents an upper closing surface of the sole casting mold (15). In particular, the lower surface is molded by the lasted upper (10). If a displacer is used instead of an upper (10), e.g. in order to manufacture only a shoe sole, the statements made here with respect to the lasted upper (10) may be applied equally to the displacer. In step 3, the two lateral, opposing elements (16a, 16b) are translationally moved in the direction R2. In this way, the sole casting mold (15) is nearly closed, however, the sole casting mold is at least not sealed airtight. No seals are provided at the edges of the sole casting mold (15) in order to explicitly prevent an air exchange between the thereby formed cavity (18), which is formed by the interior of the sole casting mold (15), and the environment. Therefore, a sole casting mold (15) is also referred to as "open" within the scope of the present invention.

Step 4 shows the cavity (18) in a lateral view. In addition, it is indicated in step 4 that the spraying means (25) together with the spraying needle (26) is translationally moved in the direction R₃ towards the sole casting mold (15). Thereby, the spraying means (25) is attached to the channel (30) comprised by the sole casting mold in a form-fit manner. Between step 4 and step 5, the injection (104) of the foamed sole material (20) occurs through the spraying means (25), the spraying needle (26) and the channel (30) into the cavity (18). Subsequently, in a step not shown in Fig. 2, the spraying means (25) are translationally moved backwards away from the sole casting mold (15) in the reversed direction of the direction R4 indicated in step 4. Finally, in step 5, the movement of the traverse element (17) occurs in the direction Ri, i.e. upwards towards the lasted upper (10). This is accompanied by a geometry change (106) of the sole casting mold (15). In this case, the injected sole material (20) is compacted and brought into a predefined shape by the nature of the sole casting mold (15). Moreover, the movement and thus the geometry change (106) of the sole casting mold (15) of the traverse element (17) occurs so far in the direction R1 that the channel is closed. Thus, a backflow of the sole material (20) is prevented.

As shown in Fig. 2, the step of molding a lower surface (108) of the lasted upper (possibly the displacer) may occur before the step of injecting (104) the foamed sole material (20). The injected sole material (20) forms the shape of a sole in this method. Moreover, the sole material (20) may contain the same material as the upper (10) or be the same material and an entire shoe may be provided directly by the connection of the sole to the upper (10).

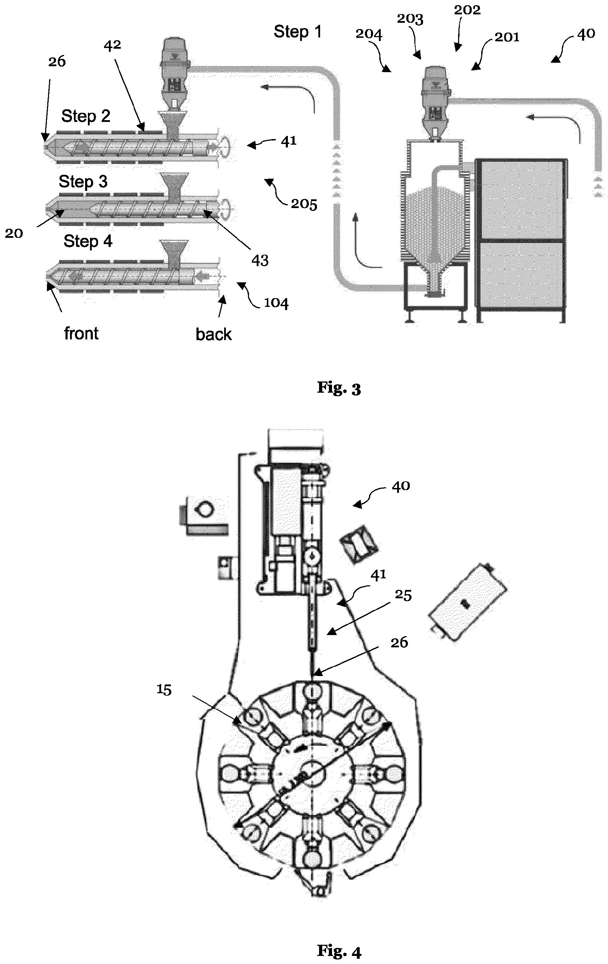

Fig. 3 shows a diagram for preparing the sole material (20) outside the sole casting mold (15) in a foaming unit (40) according to an embodiment of the invention. The foaming unit (40) may also be referred to as injection and plasticising unit (SPE). In step 1, the material provision (201) of a first material and the provision (202) of a blowing agent occur. Finally, a mixture is formed (203) of the first material, preferably TPU pellets, and the blowing agent. The first material may be a thermoplastic, elastomer, or a thermoset, preferably the first material is a thermoplastic. The blowing agent may be a solid blowing agent and/or a gaseous blowing agent, wherein solid blowing agents may be chemical and/or physical solid blowing agents or a combination thereof, such as, e.g., Konz V 2893 and/or Konz V 2894, wherein gaseous blowing agents maybe, e.g., a CO2 gas injection. By choosing the materials and the quantitative composition, the required properties such as density, heat resistance, and viscosity of the sole material (20) may be defined. Different TPU pellets may also be mixed with the blowing agent. Due to the mixing, a homogeneous distribution is provided, whereby the foaming is improved. In an intermediate step (204), the TPU pellets are dried to reduce the moisture. This drying (204) may be applied to the mixture as well as only to the TPU pellets. In the latter case, the drying (204) would thus take place without the blowing agent.

In steps 2 to 4, one extruder (41) each is shown. For reasons of clarity, the reference numerals are not shown in all steps. In step 2, the dried TPU pellets and the blowing agents, thus the mixture of the materials, are fed to a screw (43) of an extruder (41). The screw (43) rotates and thereby draws in the mixture from a material feeding unit (a feeder). The mixture is driven in particular forward by the rotational movement of the screw (43). The screw (43) moves backwards, indicated by the arrows in step 2 of Fig. 3.

In step 2 and step 3, a compacting and heating (205) of the mixture occurs with the help of a heating unit (42) and the compaction by the screw (43), in particular in the intermediate spaces of the screw (43), to cause an interaction of the mixture. This thus represents the plastification or the melting of the TPU pellets. In addition, the reaction occurs with the blowing agent so that the entire sole material (20) foams, wherein the foaming is accompanied by a decrease in density. In step 3, the injection (104) of the foamed sole material (20) occurs, wherein the entire screw (43) is moved forward, this is indicated by the red arrows in step 4 of Fig. 3. The direction forward in the direction of the spraying needle is opposite to the direction backwards from step 2. The density of the injected sole material may here be between 0.2 - 1.2 g/cm³.

Fig. 4 shows an apparatus of a plurality of sole casting molds (15) with a spraying means (25) and a foaming unit (40) according to an embodiment of the present invention. In this exemplary embodiment, eight sole casting molds (15) are shown. Each sole casting mold (15) consists of at least the two opposing elements (16a, 16b) for receiving and releasing the upper, the traverse element (17) as well as the channel (30), whereby the sole material may be introduced (not provided with reference numerals in Fig. 4), as well as the further above-described structural elements. The foaming unit (40) in this example is only present in a simple manner and contains at least the extruder (41), the spraying means (25) and the spraying needle (26) as well as the further above-described structural elements. The sole casting molds (15) are present in a circular arrangement, which may rotate about the center point. By the rotational movement about an angle of 360°/8=45°, the next sole casting mold (15) each may be moved into the correct position in order to apply the above-described method to the sole casting mold (15) now in operation.

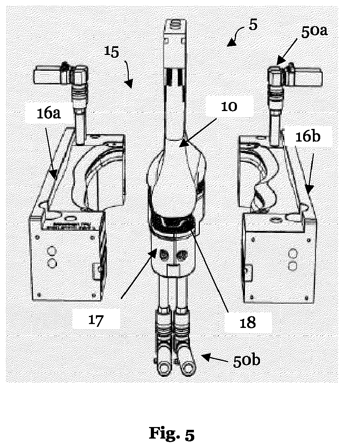

Fig. 5 shows an embodiment of the apparatus (5) according to the invention for manufacturing a shoe with cooling channels (50a, 50b). The cooling channels (50a, 50b) as well as the connection points in order to allow cooling liquid, e.g. water, to flow in and out, are provided in the traverse element (17) as well as in the two opposing elements (16a, 16b) for receiving and releasing the upper (10). The cooling channels introduced directly into the sole casting mold (15) in this manner ensure a more efficient cooling, since the heat transfer is increased. In particular, the heat transfer coefficient may be increased, since the distance between the warm medium, the sole material (20) and the cooling medium is reduced. In addition, a curved course of the cooling channels within the sole casting mold (15), due to matching of the channels to the sole casting mold (15), ensures a better mixing of the coolant itself and possibly a turbulent boundary layer, so that overall the heat transfer coefficient may be further increased. The step of cooling occurs after the injection. The two opposing elements (16a, 16b) for receiving and releasing the upper (10), which are shown in Fig. 5, abut each other, as e.g. shown in step 5 in Fig. 2, and are not remote from each other as shown in Fig. 5. During cooling, the cavity (18) still remains closed, in particular, the lasted upper (10) continues to close the top side for the most part, so that, however, air may still escape. The temperature of the sole material (20) may be between 80°C and 260°C. The cooling may be adjusted such that the sole casting mold (15) has a temperature between 15°C and 50°C, which corresponds to the final temperature of the sole material (20) after demolding.

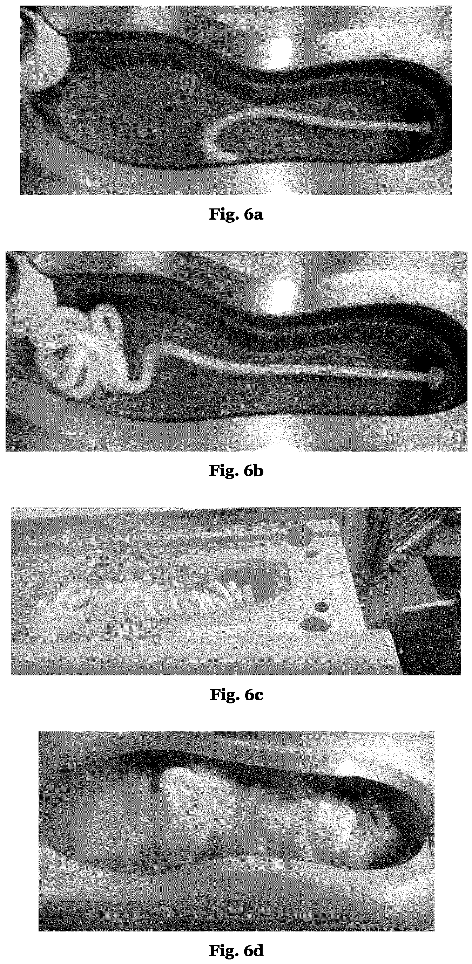

Fig. 6a to Fig. 6d show an embodiment of the method (1) according to the invention and the apparatus (5) according to the invention for manufacturing a shoe during an injection process at different times. Therein, the time of Figs. 6a to 6d has progressed further. The injection of the sole material (20) into the sole casting mold (15) is shown. For reasons of clarity, no lasted upper (10) is shown for covering the top side of the open sole casting mold (15). The foamed sole material (20) forms a curved course during injection, which resembles a serpentine shape. The foamed sole material (20) distributes very well and very quickly within the sole casting mold (15). In addition, the foamed sole material (20) does not inject out of the sole casting mold (15), but remains within the cavity (18). It can already be seen from this that no sealing has to occur as in high-pressure methods, but air may escape from the cavity (18), for example, via gaps between the bottom side of the lasted upper (10). This is in particular the case when the traverse element (17) travels upwards towards the lasted upper (10). Thus, the direction in which the sole material (20) is injected into the sole casting mold (15) changes relative to the sole casting mold (15), over time.

### 6. List of Reference Numerals

- 1:: Method for manufacturing a shoe
- 5:: Apparatus for manufacturing a shoe
- 10:: (lasted) upper
- 15:: Sole casting mold
- 16a:: The first of the two opposing elements for receiving and releasing the upper
- 16b:: The second of the two opposing elements for receiving and releasing the upper
- 17:: Traverse element of the sole casting mold
- 18:: Cavity
- 20:: (foamed) sole material
- 25:: Spraying means
- 26:: Spraying needle
- 30:: Channel in the sole casting mold
- 40:: Foaming unit
- 41:: Extruder
- 42:: Heating unit
- 43:: Screw
- 50a:: Cooling channel
- 5ob:: Further cooling channel
- 101:: Lasting an upper
- 102:: Providing an open sole casting mold
- 103:: Foaming of sole material outside the sole casting mold
- 104:: Injecting the foamed sole material into the sole casting mold
- 105:: Bringing the lasted upper into contact with the injected sole material
- 106:: Geometry change of the sole casting mold
- 107:: Moving the lasted upper towards the sole casting mold
- 108:: Molding a lower surface
- 201:: Providing a first material
- 202:: Providing at least one blowing agent
- 203:: Forming a mixture of the first material and the blowing agent
- 204:: Drying the mixture or the first material
- 205:: Compacting and heating the mixture

### Further examples

1. A method (1) for manufacturing a shoe, comprising the steps:
   a) lasting an upper (101);
   b) providing an open sole casting mold (102);
   c) foaming sole material outside the sole casting mold (103);
   d) injecting the foamed sole material into the sole casting mold (104); and
   e) bringing the lasted upper into contact with the injected sole material (105).
2. The method of example 1, wherein the sole material experiences a density change of at most 5% relative to the density of the sole material during the injecting in a time of 0.5 seconds after injecting into the sole casting mold.
3. The method of any one of the preceding examples, wherein foaming (103) of the sole material comprises:
   c.1) providing a first material (201), the first material comprising at least one of the list of thermoplastics, elastomers, and thermosets; and
   c.2) providing at least one blowing agent (202).
4. The method of the preceding example, wherein providing of the first material (201) occurs in the form of pellets, and wherein providing of the at least one blowing agent (202) preferably occurs in the form of pellets.
5. The method of any one of the preceding examples 3-4, wherein foaming (103) of the sole material further comprises:
   c.3) forming a mixture of the first material and the blowing agent (203); and
   c.4) drying the mixture (204), wherein drying is arranged such that the maximum moisture content of the mixture is 2.0%.
6. The method of the preceding example, wherein foaming (103) of the sole material further comprises:
   c.5) compacting and heating the mixture (205) to cause an interaction, in particular a foaming, of the mixture, wherein the foaming is accompanied by a decrease in density.
7. The method of any one of the preceding examples, wherein the density of the injected sole material is in a range between 0.2 - 1.2 g/cm³
8. The method of any one of the preceding examples, wherein the direction in which the sole material is injected into the sole casting mold changes relative to the sole casting mold over the time.
9. The method of any one of the preceding examples, wherein the method steps comprise an air entry and/or air exit between the sole casting mold and the environment.
10. The method of any one of the preceding examples, wherein the method steps comprise an absolute value of pressure difference between the sole casting mold and the environment of a maximum of 10% of the environmental pressure.
11. The method of any one of the preceding examples, wherein the method further comprises a geometry change (106) of the sole casting mold to bring the injected sole material into a predefined shape.
12. The method of any one of the preceding examples, further comprising the step of moving the lasted upper towards the sole casting mold (107).
13. The method of any one of the preceding examples, further comprising the step of molding a lower surface (108) of the lasted upper such that the lower surface substantially forms an upper closing surface of the sole casting mold.
14. The method of the preceding example, wherein molding of the lower surface (108) is performed prior to injecting (104) the sole material, wherein the surface continues to exist in the further method steps.
15. The method of any one of the preceding examples, wherein the injected sole material is configured to form a sole.
16. The method of the preceding example, wherein the sole is attached to the lasted upper, wherein the attachment occurs without additional adhesive.
17. The method of any one of the preceding examples, wherein the lasted upper comprises the same material as the injected sole material.
18. An apparatus (5) for manufacturing a shoe, comprising:
   a) at least one open sole casting mold (15) configured to receive a lasted upper (10);
   b) at least one spraying means (25) configured to be placed in communication with the sole casting mold (15) to enable injection of sole material (20) into the sole casting mold (15); and
   c) at least one foaming unit (40) configured to foam the sole material (20) prior to injection into the sole casting mold (15).
19. The apparatus of the preceding example, wherein the sole casting mold with the received upper is substantially not sealed airtight.
20. The apparatus of any one of the preceding examples 18-19, wherein an air entry and/or air exit between the sole casting mold with the received upper and the environment is enabled.
21. The apparatus of any one of the preceding examples 18-20, wherein an absolute value of pressure difference between the sole casting mold with the received upper and the environment of a maximum of 10% of the environmental pressure is comprised.
22. The apparatus of any one of the preceding examples 18-21, wherein the sole material and/or the spraying means are configured such that the direction in which the sole material is injected into the sole casting mold changes relative to the sole casting mold over the time.
23. The apparatus of any one of the preceding examples 18-22, wherein the injected sole material is configured to experience substantially no further expansion.
24. The apparatus of any one of the preceding examples 18-23, wherein the sole material is configured to comprise a density change of a maximum of 5% relative to the density of the sole material during the injecting in a time of 0.5 seconds after injecting into the sole casting mold.
25. The apparatus of any one of the preceding examples 18-24, wherein the foaming unit comprises at least:
   a) means for mixing configured to mix a first material comprising at least one of the list of thermoplastics, elastomers, and thermosets and at least one blowing agent into a mixture;
   b) means for drying configured to dry the mixture or the first material; and
   c) means for compacting and means for heating configured to compact the mixture and to supply heat to the mixture to cause a foaming of the mixture.
26. The apparatus of the preceding example, wherein the means for drying comprises a heating unit and a fan unit configured to provide a maximum moisture content of the mixture of 2.0%.
27. The apparatus of any one of the preceding examples 25-26, wherein the means for compacting and the means for heating comprises at least one extruder and at least one heating system, wherein the extruder comprises at least one screw configured such that the mixture can be blended, compacted and transported by rotational movement of the screw.
28. The apparatus of any one of the preceding examples 18-27, wherein the sole casting mold further comprises a traverse element configured to change the geometry of the sole casting mold and to bring the injected sole material into a predefined shape, wherein
   a movement of the traverse element in one direction decreases the volume of the sole casting mold, and wherein
   a movement of the traverse element in the opposite direction increases the volume of the sole casting mold.
29. The apparatus of the preceding example, wherein the traverse element is movable in a first translational direction, wherein
   the first translational direction is substantially perpendicular to a lower surface of the lasted upper.
30. The apparatus of any one of examples 18-29, wherein the sole casting mold comprises at least two opposing elements configured to receive and release the upper, wherein
   the at least two opposing elements are movable in a second translational direction, wherein
   receiving and releasing of the upper occurs by an opposing translational movement of the at least two elements.
31. The apparatus of the preceding example in combination with example 29, wherein the first translational direction and the second translational direction are oriented substantially perpendicular to each other.
32. The apparatus of any one of examples 28-31, wherein the sole casting mold and/or the traverse element comprises plastic material.
33. The apparatus of any one of examples 18-32, wherein the sole material is injected into the sole casting mold by means of a channel comprised by walls of the sole casting mold, wherein the size of the opening of the channel is adjustable, and wherein the diameter of the opening is in the range of 2-16 mm.
34. The apparatus of the preceding example, wherein the size of the opening of the channel is in the range of 2-30 mm or wherein the diameter of the channel substantially corresponds to the diameter of the spraying means.
35. The apparatus of any one of examples 18-34, comprising a plurality of sole casting molds, wherein the sole casting molds are arranged movable to the at least one spraying means, wherein the apparatus is configured such that the method of any one of examples 1-17 can be applied continuously using the sole casting molds.
36. The apparatus of the preceding example, wherein the sole casting molds are arranged circularly, and are configured such that a relative movement to the at least one spraying means can be performed by rotation about the central axis of the circular arrangement.
37. A shoe manufactured according to a method of any one of examples 1-17.

## Claims

1. A method (1) for manufacturing a shoe, comprising the steps:
a) lasting an upper (101);
b) providing an open sole casting mold (102);
c) foaming sole material outside the sole casting mold (103);
d) injecting the foamed sole material into the sole casting mold (104); and
e) bringing the lasted upper into contact with the injected sole material (105).

2. The method of claim 1, wherein the sole material experiences a density change of at most 5% relative to the density of the sole material during the injecting in a time of 0.5 seconds after injecting into the sole casting mold.

3. The method of any one of the preceding claims, wherein foaming (103) of the sole material comprises:
c.1) providing a first material (201), the first material comprising at least one of the list of thermoplastics, elastomers, and thermosets; and
c.2) providing at least one blowing agent (202).

4. The method of the preceding claim, wherein providing of the first material (201) occurs in the form of pellets, and wherein providing of the at least one blowing agent (202) preferably occurs in the form of pellets.

5. The method of any one of the preceding claims 3-4, wherein foaming (103) of the sole material further comprises:
c.3) forming a mixture of the first material and the blowing agent (203); and
c.4) drying the mixture (204), wherein drying is arranged such that the maximum moisture content of the mixture is 2.0%.

6. The method of the preceding claim, wherein foaming (103) of the sole material further comprises:
c.5) compacting and heating the mixture (205) to cause an interaction, in particular a foaming, of the mixture, wherein the foaming is accompanied by a decrease in density.

7. The method of any one of the preceding claims, wherein the direction in which the sole material is injected into the sole casting mold changes relative to the sole casting mold over the time.

8. The method of any one of the preceding claims, further comprising the step of moving the lasted upper towards the sole casting mold (107).

9. The method of any one of the preceding claims, wherein the lasted upper comprises the same material as the injected sole material.

10. An apparatus (5) for manufacturing a shoe, comprising:
a) at least one open sole casting mold (15) configured to receive a lasted upper (10);
b) at least one spraying means (25) configured to be placed in communication with the sole casting mold (15) to enable injection of sole material (20) into the sole casting mold (15); and
c) at least one foaming unit (40) configured to foam the sole material (20) prior to injection into the sole casting mold (15).

11. The apparatus of the preceding claim, wherein the sole casting mold with the received upper is substantially not sealed airtight.

12. The apparatus of any one of the preceding claims 10 or 11, wherein the foaming unit comprises at least:
a) means for mixing configured to mix a first material comprising at least one of the list of thermoplastics, elastomers, and thermosets and at least one blowing agent into a mixture;
b) means for drying configured to dry the mixture or the first material; and
c) means for compacting and means for heating configured to compact the mixture and to supply heat to the mixture to cause a foaming of the mixture.

13. The apparatus of any one of the preceding claims 10-12, wherein the sole casting mold further comprises a traverse element configured to change the geometry of the sole casting mold and to bring the injected sole material into a predefined shape, wherein
a movement of the traverse element in one direction decreases the volume of the sole casting mold, and wherein
a movement of the traverse element in the opposite direction increases the volume of the sole casting mold.

14. The apparatus of the preceding claim, wherein the traverse element is movable in a first translational direction, wherein
the first translational direction is substantially perpendicular to a lower surface of the lasted upper.

15. A shoe manufactured according to a method of any one of claims 1-9.
